# EUROPÄISCHE PATENTSCHRIFT

(11) **EP 0 841 358 B1**
(45) Veröffentlichungstag und Bekanntmachung des Hinweises auf die Patenterteilung: **10.09.2003**
(21) Anmeldenummer: 97118483.3
(22) Anmeldetag: 24.10.1997
(51) Int. Cl.: C08G 18/61, C08G 18/80, C08G 18/10, C08G 18/79, C14C 11/00

(54) **Siloxanmodifizierte Polyisocyanate, ein Verfahren zu ihrer Herstellung und ihre Verwendung zum Zurichten von Lackledern**
Siloxane-modified polyisocyanates, process for their preparation and their use for the finishing of patent leather
Polyisocyanates modifiés par du siloxane, procédé de leur préparation et leur utilisation pour le finissage du cuir verni

(30) Priorität: 06.11.1996 DE 19645662
(43) Veröffentlichungstag der Anmeldung: 13.05.1998
(73) Patentinhaber: BAYER AG, 51368 Leverkusen (DE)
(72) Erfinder: Schmalstieg, Lutz, Dr., 50676 Köln (DE); Hassel, Tillmann Dr., 50259 Pulheim (DE); Pisaric, Karl, 50259 Pullheim (DE); Müller, Friedhelm, 51379 Leverkusen (DE); Ockelmann, Dieter, Dr., 51061 Köln (DE)

(56) Entgegenhaltungen:
- EP-A- 0 259 644
- WO-A-93/08227

## Beschreibung

Die Erfindung betrifft Siloxan-modifizierte Polyisocanate, ein Verfahren zu ihrer Herstellung durch Umsetzung unmodifizierter Polyisocyanäte mit hydroxylgruppenhaltigen Polysiloxanen und die Verwendung der modifizierten Polyisocyanate als Vernetzer bei der Zurichtung von Lackleder.

Die Herstellung von Lackledern mit Polyurethanlacken ist bekannt; s. z.B. Kunststoff-Handbuch, Bd. 7, "Polyurethane", 3. Auflage, Carl Hanser Verlag, München/Wien 1993, 637 f. Verwendet werden vornehmlich 2-Komponenten-Lacke, bestehend aus einer Losung polyfunktioneller Isocyanate und polyfunktioneller hydroxylgruppenhaltiger Weichharze in organischen Lösungsmitteln. Durch eine geeignete Auswahl dieser Ausgangskomponenten, der Lösungsmittel und verschiedener Zusatzmittel hat man versucht,Verlauf und Trocknung der Lacke und die mechanischen Eigenschaften der daraus erhältlichen Lackierungen günstig zu beeinflussen Die Applikation der Lacklösung erfolgt auf die entsprechend grundierten Leder mit den üblichen Methoden der Lederzurichtung

Bei der Lacklederherstellung kommt es speziell darauf an, die Decklackierung ("top coat") einerseits so elastisch einzustellen, daß ein akzeptables Knickbruchverhalten resultiert, andererseits die Oberflächenhärte so hoch zu wählen, daß beim Aufeinanderlegen der beschichteten Leder keine störenden Abdrücke entstehen und die Beschichtung mechanischen Beanspruchungen (z.B. Bürsten und Kratzen) widersteht. Um diesen gegenläufigen Anforderungen gerecht zu werden, wurde in der Vergangenheit versucht, die Oberflächenbeschaffenheit der Polyurethanbeschichtung durch Zugabe von Siliconölen zu verbessern. Die durch den Siliconölzusatz erzielten Verbesserungen bereiteten jedoch vielfach neue Schwierigkeiten: So verschlechtert ein Siliconölanteil im Polyurethanlackansatz die Stabilität des Gießvorhanges beim Verarbeiten auf den in der Technik gebräuchlichen Lackgießmaschinen. Außerdem verstärkt Siliconöl die Bildung von Fettausschlägen auf nicht vollständig fettfreien Ledern.

Aufgabe der vorliegenden Erfindung war es daher, 2-Komponenten-Polyurethansysteme für die Herstellung von Lackleder bereitzustellen, die nicht mit den Nachteilen des Standes der Technik behaftet sind. Diese Aufgabe konnte mit der Bereitstellung der nachstehend näher charakterisierten Polyisocyanate gelöst werden.

Gegenstand der Erfindung sind Siloxangruppen aufweisende Polyisocyanate mit einem Gehalt an Isocyanatgruppen von 15 bis 22 Gew.-%, gekennzeichnet durch
- i): einen Gehalt an aromatisch gebundenen Isocyanatgruppen von 50 bis 80%, bezogen auf die Gesamtzahl der Isocyanatgruppen,
- ii): einen Gehalt an aliphatisch gebundenen Isocyanatgruppen von 20 bis 50%, bezogen auf die Gesamtzahl der Isocyanatgruppen, und
- iii): einen Gehalt an über Urethangruppen chemisch eingebauten überwiegend linearen Polydimethylsiloxanen von 1,5 bis 6 Gew.-%, bezogen auf das Gesamtgewicht an Polyisocyanat.

Gegenstand der vorliegenden Erfindung ist auch ein Verfahren zur Herstellung derartiger siloxanmodifizierter Polyisocyanate sowie ihre Verwendung als Vernetzer bei der Zurichtung von Lackledern.

Der Erfindung liegt die überraschende Beobachtung zugrunde, daß bestimmte, nachstehend näher charakterisierte siloxanmodifizierte Polyisocyanate ein besonders gutes Knickbruchverhalten vermitteln.

Die Verwendung von Hydroxylgruppen-aufweisenden Siloxanverbindungen in Polyurethanlacksystemen ist prinzipiell bekannt. In WO 91/18954 werden beispielsweise Polyurethanlacksysteme für die Automobildecklackierung beschrieben, die zum Zweck einer verbesserten Beständigkeit gegen mechanische Belastungen hydroxylgruppenhaltige Siloxanverbindungen enthalten. Zum einen finden sich keinerlei Hinweise auf mögliche Kombinationen von aromatischen (und schon gar nicht von aromatisch/aliphatischen) Polyisocyanaten mit hydroxylgruppenhaltigen Siloxanverbindungen, zum anderen fehlt jeder Hinweis auf die Zurichtung von Lackleder.

Die Herstellung der siloxanmodifizierten Polyisocyanate erfolgt durch Umsetzung von
- A): Polyisocyanaten mit aromatisch und aliphatisch gebundenen Isocyanatgruppen
mit
- B): Polydimethylsiloxanen mit endständigen Hydroxylgruppen.

Bevorzugt zu verwendende Komponenten A) sind Polyisocyanate, die durch (katalytisch induzierbare) Mischtrimerisation von aromatischen und aliphatischen Diisocyanaten hergestellt werden können. Derartige Polyisocyanuratpolyisocyanate sind prinzipiell bekannt; sie werden beispielsweise in der DD-PS 212 041 und in den DE-OS 2 616 415 und 1 954 093 beschrieben.

Bevorzugte Polyisocyanuratpolyisocyanate werden vorzugsweise durch (katalytisch induzierbare) Mischtrimerisation von 2,4- und/oder 2,6-Toluylendiisocyanat mit Hexamethylendiisocyanat hergestellt, wobei die Ausgangsprodukte in einem solchen Mischungsverhältnis eingesetzt werden, daß die entstehenden Polyisocyanuratpolyisocyanate 50 bis 80, vorzugsweise 60 bis 70 Gew.-% an eingebauten Toluylendiisocyanat-Einheiten und 20 bis 50, vorzugsweise 30 bis 40 Gew.-% an eingebauten Hexamethylendiisocyanat-Einheiten enthalten.

Bevorzugte Polyisocyanuratpolyisocyanate besitzen einen Isocyanuratgehalt (berechnet als C₃N₃O₃, MG 126) von vorzugsweise 24 bis 33, insbesondere 25 bis 29 Gew.-%.

Die als Komponente A einsetzbaren Polyisocyanate weisen einen NCO-Gehalt von 17 bis 23, vorzugsweise 19 bis 21 Gew.-%, bezogen auf Festharz, auf und werden vorzugsweise in Form 50 bis 70 gew.-%iger Lösungen in organischem Lösungsmittel in die Modifizierungsreaktion eingesetzt. Geeignete organische Lösungsmittel umfassen beispielsweise: Ester wie Ethylacetat, Butylacetat, Methoxypropylacetat, aromatische Kohlenwasserstoffe wie Toluol, Xylol, Ketone wie Methylethylketon oder Cyclohexanon.

Nach dem erfindungsgemäßen Verfahren werden die Polyisocyanatkomponenten A mit den hydroxylfunktionellen Polydimethylsiloxanen B) vorzugsweise in Lösung zur Reaktion gebracht. Die Polydimethyl-siloxane B) sind prinzipiell bekannt; Methoden zu ihrer Herstellung werden beispielsweise in W. Noll, Chemie und Technologie der Silicone, Verlag Chemie GmbH, Weinheim 1968, S. 139 ff. beschrieben. Erfindungsgemäß als Komponente B) zu verwendende Polydimethylsiloxane sind vorwiegend linear aufgebaut und entsprechen der Formel

HO-(CH₂)ₙ-Si(CH₃)₂-[OSi(CH₃)₂]ₘ-(CH₂)ₙ-OH

worin
- n: für eine Zahl zwischen 1 und 4, vorzugsweise zwischen 1 und 3, und
- m: für eine Zahl zwischen 2 und 25, vorzugsweise zwischen 3 und 20, stehen.

Ganz besonders bevorzugt werden als Komponente B) lineare Polydimethylsiloxane mit endständigen Si-CH₂OH-Gruppen und einem OH-Gehalt von 2 bis 6 Gew.-% eingesetzt. Im Rahmen der vorliegenden Erfindung wurde die Beobachtung gemacht, daß diese hydroxylfunktionellen Polysiloxane eine besonders gute Verträglichkeit mit der Polyisocyanat-komponente A) aufweisen.

Die Komponente B) wird in einer Menge von 1,5 bis 6, vorzugsweise 2 bis 5 Gew.-%, bezogen auf Isocyanatkomponente A), eingesetzt. Die Umsetzung der Hydroxylkomponente B) mit der Polyisocyanatkomponente A) erfolgt im allgemeinen so, daß die Hydroxylkomponente B) zu überschüssiger Polyisocyanat-komponente A) bei Reaktionstemperatur in einem organischen Lösungsmittel der obengenannten Art zudosiert und im Temperaturbereich von 25 bis 120, vorzugsweise 40 bis 80°C, zur Reaktion gebracht wird. Überraschenderweise kommt es bei dieser einfachen Reaktionsweise zu keinerlei Unverträglichkeiten oder Ausfällungen Die erfindungsgemäßen siloxanmodifizierten Polyisocyanate fallen dabei in Form farbloser bis blaßgelb gefärbter Lösungen mit einem Gehalt an Isocyanatendgruppen von 15 bis 22 Gew.-%, bezogen auf die lösemittelfreie Form, an. Sie werden vorzugsweise in Form 30 bis 70 gew.-%iger Lösungen zur Zurichtung von Lackledern eingesetzt.

Die Zurichtung von Lackledern mit Hilfe der erfindungsgemäßen Polyisocyanate erfolgt mittels 2-Komponententechnologie. Hierbei werden die erfindungsgemäßen siloxanmodifizierten Polyisocyanate mit Polyolkomponenten kombiniert. Hierbei handelt es sich vorzugsweise um Polyether- und/oder Polyesterpolyole.

Die die erfindunggemäßen Polyisocyanate enthaltenden Polyurethanlacklösungen können in der üblichen Weise von Hand oder maschinell durch Bürsten, Spritzen oder Gießen auf das in geeigneter Weise vorbereitete Leder aufgebracht werden. Der Lackfilm trocknet innerhalb einiger Stunden bei Zimmertemperatur staubfest und ohne Bläschenbildung auf. Selbst auf stärker fetthaltigem Ledermaterial bilden sich keine sichtbaren Fettschleier. Die erhaltenen Beschichtungen zeigen einen hervorragenden Verlauf und besitzen einen angenehmen klebfreien Griff. Beim Stapeln der Leder treten keinerlei unerwünschte Abdrücke auf. Auch die mechanischen Eigenschaften, insbesondere die Flexibilität, sind gegenüber solchen Beschichtungen, die mit konventionellen Isocyanaten vernetzt wurden, verbessert. Ein weiterer Vorteil der erfindungsgemäß zugerichteten Lackleder ist eine wesentlich größere Beständigkeit der Lackschicht gegen mechanischen Beanspruchungen bei Nässe und Kälte. Dies wird durch einen unten beschriebenen Vergleichsversuch belegt. In Anbetracht des vergleichsweise hohen Anteils an Toluylendiisocyanat in der Beschichtung ist die Vergilbungsbeständigkeit der lackierten Leder unter UV-Belastung erstaunlich gut, so daß auch hellfarbige Lackleder problemlos herstellbar sind.

Die in den nachfolgenden Beispiele gemachten Angaben in Teilen oder Prozenten beziehen sich jeweils auf das Gewicht.

### Beispiele

Die Messung der Viskositäten erfolgte nach DIN 53 019 bei 23°C mittels Rotationsviskosimeter.

### Beispiel 1: Herstellung eines erfindungsgemäßen Polyisocyanuratpolyisocyanats

In einem geeigneten Reaktionsgefäß werden 1300 Teile einer 80/20-Mischung aus 2,4- und 2,6-Diisocyanatotoluol zusammen mit 2600 Teilen Hexamethylendiisocyanat auf 60°C erwärmt, danach werden 0,78 Teile Tri-n-butylphosphan hinzugegeben. Durch leichtes Kühlen wird die Temperatur des Reaktionsgemisches auf 60°C gehalten. Nach ca. 4,5 Stunden weist das Reaktionsgemisch einen NCO-Gehalt von ca. 36 % auf. Zu diesem Zeitpunkt wird die Reaktion durch Zugabe von 0,2 Teilen Schwefel gestoppt. Das nicht umgesetzte Monomerengemisch wird durch Destillation bei 175 bis 180°C/l Torr entfernt. Man erhält 2221 Teile eines gelblichen Harzes mit einem NCO-Gehalt von 20,0 %. Das erhaltene Polyisocyanuratpolyisocyanat wird 60 %-ig in Butylacetat gelöst; diese Lösung weist dann eine Viskosität von 150 mPas (23°C) und einen NCO-Gehalt von 12,2 % auf. Eine gaschromato-graphische Untersuchung des Destillats der Dünnschichtdestillation ergibt ein TDI/HDI-Einbauyerhältnis von 2:1.

Zu 1000 g der Lösung des Polyisocyanuratpolyisocyanats werden bei 45°C 19 g eines linearen Polydimethylsiloxans mit Si-CH₂OH-Endgruppen mit einem Hydroxylgruppengehalt von 3 % zugetropft. Die zunächst trübe Reaktionsmischung wird mit zunehmender Reaktionsdauer homogen. Man rührt bei 50°C, bis ein konstanter NCO-Gehalt von 11,7% erreicht ist. Die Lösung des erhaltenen siloxanmodifizierten Polyisocyanuratpolyisocyanats besitzt eine Viskosität von 160 mPas (23°C).

### Beispiel 2: Herstellung eines erfindungsgemäßen Polyisocyanuratpolyisocyanats

Zu 1000 g der Lösung des Polyisocyanuratpolyisocyanats aus Beispiel 1 werden bei 45°C 25 g eines linearen Polydimethylsiloxans mit Si-(CH₂)₃-OH-Endgruppen mit einem Hydroxyl-gruppengehalt von 3,7% (®Tegomer H-Si 2110 der Th. Goldschmidt AG, Essen) zugetropft. Die Reaktionsmischung wird bei 50°C gerührt, bis ein konstanter NCO-Gehalt von 11,6 % erreicht ist. Die Lösung des erhaltenen siloxanmodifizierten Polyisocyanuratpolyisocyanats besitzt eine Viskosität von 160 mPas (23°C).

### Beispiel 3: Anwendungsbeispiel zur Herstellung eines Lackleders

### A) Vorbereitung des Leders

Ein chromgegerbtes Rindleder wird mit 5 % eines selbstabstumpfenden Chromgerbstoffes (®Baychrom A, Handelprodukt der Bayer AG), 2 % eines Polyphosphats (®Coriagen V der BK Ladenburg) und 5 % ®Tanigan QF (synthetischer Austauschgerbstoff, Handelsprodukt der Bayer AG) gemäß dem Anwendungsvorschlag G 630 der Bayer AG nachgegerbt und mit 2,3 % Lanolin sowie 2,8 % eines synthetischen und 0,9 % eines natürlichen Fettes gefettet. Nach Vakuumtrocknung und Schleifen wird mit einer Mischung aus 40 Teilen eines Penetrationsbeschleunigers (®Euderm Driver DE, Handelsprodukt der Bayer AG), 250 Teilen einer 40 %-igen Polyacrylatdispersion (®Euderm Grund 45 AN, Handelsprodukt der Bayer AG) sowie 710 Teilen Wasser mittels Gießmaschine mit einer Auftragsstärke von 14 g/qfs, naß, imprägniert. Die Grundierung erfolgt mit einer Grundiermischung bestehend aus 130 Teilen ®Eukanol Weiß (kaseinformiertes Titandioxid, Handelsprodukt der Bayer AG), 200 Teilen ®Baygen Grund A (hydroxylfunktioneller Butadienbinder, Handelsprodukt der Bayer AG) sowie 670 Teilen Wasser. Die Grundiermischung wird zweimal auf das Leder aufgeplüscht.

### B) Lackierung

Eine Mischung aus 100 Teilen ®Baygen TOP U (hydroxyfunktioneller Polyester, 70 %-ig gelöst in Ethylacetat/Butylacetat 1:1, Handelsprodukt der Bayer AG), 65 Teilen des Polyisocyanats aus Beispiel 1 und 120 Teilen ®Baygen Verdünner O (Lösungmittelgemisch, Handelsprodukt der Bayer AG) wird in einer Menge von 20g/qfs airless auf das vorbereitete Leder gespritzt. Dann wird bei 40°C/40 % rel. Luftfeuchte flachliegend in einem staubfreien, gut ventilierten Raum getrocknet.

Nach 12 Stunden wurde das Leder beurteilt. Verlauf und Fülle sind sehr gut.

Knickbruchverhalten, gemessen mit einem
- Bally-Flexometer gemäß DIN 53 340:: >50 000 Knickungen ohne Beschädigung, trocken
>20 000 Knickungen ohne Beschädigung, naß
- Lichtechtheit gemäß DIN 54 004:: Stufe 5, int. Blauskala ohne Vergilbung

### Vergleichsbeispiel

Man stellt ein Polyisocyanuratpolyisocyanat gemäß Beispiel 1 her, verzichtet aber auf die Siloxanmodifizierung.

Auf das gemäß Beispiel 3 vorbereitete Leder wird eine Mischung aus 100 Teilen ®Baygen TOP U (hydroxyfunktioneller Polyester, 70 %-ig gelöst in Ethylacetat/Butylacetat 1:1, Handelsprodukt der Bayer AG), 62 Teilen des unmodifizierten Polyisocyanuratpolyisocyanats und 120 Teilen ®Baygen Verdünner O (Lösungsmittelgemisch, Handelsprodukt der Bayer AG) in einer Menge von 20 g/qfs airless gespritzt. Dann wird bei 40°C/40 % rel. Luftfeuchte flachliegend in einem staubfreien, gut ventilierten Raum getrocknet. Nach 12 Stunden wurde das Leder beurteilt. Verlauf und Fülle sind deutlich schlechter als in Beispiel 3.

Knickbruchverhalten, gemessen mit einem
- Bally- Flexometer gemäß DIN 53 340:: nach 50 000 Knickungen, trocken: leichte Beschädigungen
nach 15 000 Knickungen, naß: deutliche Beschädigungen
- Lichtechtheit gemäß DIN 54 004:: Stufe 5, int. Blauskala ohne Vergilbung

## Patentansprüche

1. Siloxangruppen aufweisende Polyisocyanate mit einem Gehalt an Isocyanatgruppen von 15 bis 22 Gew.-%, **gekennzeichnet durch**
i) einen Gehalt an aromatisch gebundenen Isocyanatgruppen von 50 bis 80 %, bezogen auf die Gesamtzahl der Isocyanatgruppen,
ii) einen Gehalt an aliphatisch gebundenen Isocyanatgruppen von 20 bis 50 %, bezogen auf die Gesamtzahl der Isocyanatgruppen, und
iii) einen Gehalt an über Urethangruppen chemisch eingebauten überwiegend linearen Polydimethylsiloxanen von 1,5 bis 6 Gew.-%, bezogen auf Polyisocyanat.

2. Verfahren zur Herstellung siloxanmodifizierter Polyisocyanate nach Anspruch 1 durch Umsetzung von
A) Polyisocyanaten mit einem Isocyanatgruppengehalt von 17 bis 23 Gew.-% und einem Gehalt von 20 bis 50 %, bezogen auf Isocyanatgruppen, an aliphatisch gebundenen Isocyanatgruppen und einem Gehalt von 50 bis 80 %, bezogen auf Isocyanatgruppen, an aromatisch gebundenen Isocyanatgruppen mit
B) Polydimethylsiloxanen mit endständigen Hydroxylgruppen.

3. Verfahren nach Anspruch 2, wonach man als Komponente B) überwiegend lineare Polydimethylsiloxane der Formel
HO-(CH₂)ₙ-Si(CH₃)₂-[OSi(CH₃)₂]ₘ-(CH₂)ₙ-OH
verwendet, worin
n für eine Zahl zwischen 1 und 4 und
m für eine Zahl zwischen 2 und 25 stehen.

4. Verwendung siloxanmodifizierter Polisocyanate nach Anspruch 1 als Vernetzer bei der Zurichtung von Lackleder.

## Claims

1. Polyisocyanate having siloxane groups and containing from 15 to 22% by weight of isocyanate groups, **characterized by**
i) a content of from 50 to 80%, based on the total number of isocyanate groups, of aromatically bonded isocyanate groups,
ii) a content of from 20 to 50%, based on the total number of isocyanate groups, of aliphatically bonded isocyanate groups and
iii) a content of from 1.5 to 6% by weight, based on polyisocyanate, of predominantly linear polydimethylsiloxanes chemically incorporated via urethane groups.

2. Process for the preparation of siloxane-modified polyisocyanates according to Claim 1 by reaction of
A) polyisocyanates containing from 17 to 23% by weight of isocyanate groups and having a content of from 20 to 50%, based on isocyanate groups, of aliphatically bonded isocyanate groups and a content of from 50 to 80%, based on isocyanate groups, of aromatically bonded isocyanate groups with
B) polydimethylsiloxanes having terminal hydroxyl groups.

3. Process according to Claim 2, in which predominantly linear polydimethylsiloxanes of the formula
HO-(CH₂)ₙ-Si(CH₃)₂-[OSi(CH₃)₂]ₘ-(CH₂)ₙ-OH
in which
n represents a number between 1 and 4 and
m represents a number between 2 and 25,
are used as component B).

4. Use of siloxane-modified polyisocyanates according to Claim 1 as crosslinking agents in the finishing of patent leather.

## Revendications

1. Polyisocyanates présentant des groupes siloxanes avec une quantité de groupes isocyanates de 15 à 22 % en poids, **caractérisé par**
i) une quantité de groupes isocyanates liés aromatiquement de 50 à 80 %, rapporté au nombre total de groupes isocyanates,
ii) une quantité de groupes isocyanates liés aliphatiquement de 20 à 50 %, rapporté au nombre total de groupes isocyanates, et
iii) une quantité de polydiméthylsiloxanes principalement linéaires introduits chimiquement sur des groupes uréthanes de 1,5 à 6 % en poids, rapporté au polyisocyanate.

2. Procédé de préparation de polyisocyanates modifiés par des siloxanes selon la revendication 1 par réaction de
A) des polyisocyanates avec une quantité de groupes isocyanates de 17 à 23 % en poids et une quantité de 20 à 50 %, rapporté aux groupes isocyanates, de groupes isocyanates liés aliphatiquement et une quantité de 50 à 80 %, rapporté aux groupes isocyanates, de groupes isocyanates liés aromatiquement avec
B) des polydiméthylsiloxanes avec des groupes hydroxyle terminaux.

3. Procédé selon la revendication 2, selon lequel on utilise comme composant B) des polydiméthylsiloxanes principalement linéaires de formule
HO-(CH₂)ₙ-Si(CH₃)₂-[OSi(CH₃)₂]ₘ-(CH₂)ₙ-OH
dans laquelle
n est un nombre entre 1 et 4 et
m est un nombre entre 1 et 25.

4. Utilisation des polyisocyanates modifiés par des siloxanes selon la revendication 1 comme agent réticulant pour l'apprêtage de cuir verni.
